# FASCICULE DE BREVET EUROPEEN

(11) **EP 3 555 190 B1**
(45) Date de publication et mention de la délivrance du brevet: **01.11.2023**
(21) Numéro de dépôt: 17825571.7
(22) Date de dépôt: 12.12.2017
(51) Int. Cl.: C08K 5/43, F16L 59/02

(54) **PRODUIT DE SURFACAGE RESISTANT AU FEU ET AUX ALCALINS POUR PLAQUES DE MOUSSE**
FEUERFESTES UND ALKALIBESTÄNDIGES OBERFLÄCHENBELAGSPRODUKT FÜR SCHAUMSTOFFPLATTEN
FIRE-RESISTANT AND ALKALI-RESISTANT SURFACING PRODUCT FOR FOAM BOARDS

(30) Priorité: 16.12.2016 FR 1662649
(43) Date de publication de la demande: 23.10.2019
(73) Titulaire: Saint-Gobain Adfors, 92400 Courbevoie (FR)
(72) Inventeur: SILIOC, Christelle, 69970 Chaponnay (FR); SOLARSKI, Samuel, 59110 La Madeleine (FR)
(74) Mandataire: Saint-Gobain Recherche
(86) Numéro de dépôt international: PCT/FR2017/053520
(87) Numéro de publication internationale: WO 2018/109363

(56) Documents cités:
- JP-A- 2006 213 881

## Description

La présente invention concerne un produit de surfaçage pour des plaques de mousse organique destinées à être intégrées dans des systèmes composites d'isolation thermique par l'extérieur (ITE ou ETICS de l'anglais *External Thermal Insulation Composite System*)*.* Elle concerne également les plaques de mousse organique portant sur au moins une de leur deux faces principales, de préférence sur leur deux faces principales, un tel produit de surfaçage. Enfin, l'invention concerne un système composite d'isolation thermique par l'extérieur contenant une plaque de mousse organique avec un produit de surfaçage selon l'invention.

Les systèmes composites d'isolation thermique par l'extérieur comprennent généralement une plaque d'un matériau isolant thermique, typiquement une plaque de mousse organique rigide, placée contre la face externe d'une façade de bâtiment, généralement au moyen d'un mortier colle. La plaque de matériau isolant comporte avantageusement sur ses deux faces un matériau de surfaçage destiné à faciliter sa production et à améliorer ses propriétés d'utilisation, telles que la résistance mécanique.

Le matériau de choix pour ces produits de surfaçage est un textile de verre non tissé, typiquement un mat de verre, ou voile de verre.

Le verre typiquement utilisé pour les voiles de verre destinés au surfaçage de plaques de mousse est le verre E qui est assez sensible aux substances basiques, ou alcalines. Cette sensibilité aux matériaux alcalins du verre E pose un problème dans un ETICS car les deux faces de la plaque isolante viennent en contact avec un matériau alcalin : le mortier colle sur la face tournée vers la façade, d'une part, et le mortier de finition sur la face tournée vers l'extérieur d'autre part.

Pour réduire la sensibilité aux alcalins et prévenir la dégradation des propriétés mécaniques des produits de surfaçage et des produits d'isolation thermique (en forme de plaque) les contenant, il serait certes possible de les revêtir d'une couche organique protectrice, mais une telle couche diminuerait de manière indésirable la résistance au feu des plaques.

La présente invention a pour but de proposer un produit de surfaçage pour plaques de mousse qui présente à la fois une bonne résistance au feu et de bonnes propriétés mécaniques et qui conserve par ailleurs ces bonnes propriétés mécaniques après un test de vieillissement à l'eau et après un test de vieillissement aux alcalins.

La présente invention a également pour but d'augmenter le caractère hydrophobe des produits de surfaçage et des produits d'isolation thermique les contenant, sans réduire de manière significative la résistance au feu des produits.

Ces buts ont été atteints grâce à la mise au point d'un liant particulier pour lier les fibres du voile de verre de surfaçage, et en particulier grâce à la sélection d'un agent retardateur de flamme minéral particulier et d'une gamme restreinte de quantité de cet agent retardateur de flamme.

La présente invention a donc pour objet un produit de surfaçage pour plaques de mousse, comportant un voile de verre lié par un liant élastomère, caractérisé par le fait que le liant élastomère contient
(a) un élastomère organique et
(b) de 8 à 18 % en masse de sulfamate d'ammonium rapporté à la somme d'élastomère organique et de sulfamate d'ammonium.

Le voile de verre utilisé dans la présente invention est un textile non-tissé, également appelé intissé, fabriqué par voie humide (*wetlaid*) ou par voie sèche (*drylaid*)*,* par exemple par voie sèche avec cardage (*drylaid carded*) ou par un procédé aérodynamique (*airlaid*)*.*

Le poids surfacique du voile de verre non lié est avantageusement compris entre 30 et 350 g/m², de préférence entre 40 et 250 g/m², plus préférentiellement entre 50 et 100 g/m² et idéalement entre 55 et 80 g/m².

Après formation, le voile brut ou « nu » est imprégné avec une composition aqueuse de liant formée par mélange d'un latex de l'élastomère organique et d'une solution aqueuse de sulfamate d'ammonium. La composition aqueuse de liant peut être appliquée sur le voile par n'importe quelle technique permettant de maîtriser la quantité de liant finale après séchage et réticulation. On peut citer à titre d'exemples la pulvérisation de la composition sur le voile, l'immersion du voile dans la composition de liant, l'enduction au rideau ou au moyen d'un rouleau.

La composition aqueuse de liant présente de préférence une teneur en solides (extrait sec) comprise entre 30 et 70 % en masse, de préférence entre 40 et 60 % en masse, en particulier entre 45 et 55 % en masse.

Le sulfamate d'ammonium (H₂N-S(=O)₂O⁻ NH₄⁺ ; numéro CAS 7773-06-0) est de préférence présent dans la composition aqueuse de liant à l'état dissout dans la phase aqueuse.

L'élastomère organique qui constitue la matrice du liant élastomère est un élastomère autoréticulant, de styrène-butadiène-méthacrylate portant des fonctions carboxylate, anioniques. Ces fonctions carboxylate participent non seulement à la réaction de réticulation, mais elles confèrent au latex une charge globalement négative qui améliore l'adhésion du latex aux fibres de verre. Par « autoréticulant », on entend désigner un élastomère tel que décrit qui n'exige pas l'ajout d'un agent de vulcanisation ou de réticulation. On peut citer à titre d'exemples de latex utilisables en tant qu'élastomères organiques dans le liant de la présente invention les produits de la gamme Litex^{®} S de la société Synthomer, par exemple les latex Litex^{®} S 10656, Litex^{®} S 9074 et Litex^{®} S 9076 ; ou encore les produits Rovène 4019 et Rovène 4176 de la société Mallard Creeks Polymers.

La composition aqueuse de liant est donc de préférence un latex SBR anionique, autoréticulant contenant du sulfamate d'ammonium sous forme dissoute.

Cette composition aqueuse de liant est appliquée sur le voile nu, non lié en une quantité telle que, après séchage et réticulation du liant, la quantité de liant élastomère, rapportée au poids du voile de verre non lié, est comprise avantageusement entre 15 et 40 % en masse, de préférence entre 20 et 30 % en masse, plus particulièrement entre 22 et 28 % en masse.

La teneur en sulfamate d'ammonium du liant élastomère est comprise entre 8 à 18 % en masse, de préférence entre 9 et 17 % en masse, et idéalement entre 10 et 15 % en masse, rapporté à la somme d'élastomère organique et de sulfamate d'ammonium. L'élastomère organique représente par conséquent de 92 à 82 % en masse, de préférence de 83 à 91 % en poids, et idéalement de 85 à 90 % en masse, rapporté à la somme d'élastomère organique et de sulfamate d'ammonium.

Lorsque le liant contient moins de 8 % en masse de sulfamate d'ammonium et, de manière surprenant, plus de 18 % en masse de sulfamate d'ammonium, le produit de surfaçage ne passe pas le test de résistance au feu (voir les exemples et exemples comparatifs).

Le liant élastomère utilisé dans la présente invention est de préférence constitué uniquement de sulfamate d'ammonium et d'élastomère organique, c'est-à-dire il est de préférence exempt d'autres additifs. Lorsque des additifs sont présents, par exemple des colorants ou charges, ils ne représentent pas plus de 10 % en masse, de préférence pas plus de 5 % en masse du liant élastomère.

Afin de rendre le produit de surfaçage de la présente invention encore plus résistant aux alcalins, la Demanderesse propose de recouvrir une face du produit de surfaçage d'un revêtement hydrophobe. Cette face enduite sera celle qui ne viendra pas en contact avec la mousse mais sera tournée vers l'extérieur et sera en contact avec le mortier de collage ou le mortier de finition lorsque la plaque de mousse est intégrée dans un ETICS.

L'enduction du produit de surfaçage avec un polymère organique hydrophobe pose toutefois deux problèmes :
- Elle réduit la résistance au feu du produit de surfaçage et du produit d'isolation thermique (en forme de plaque) le contenant,
- Elle augmente le pouvoir calorifique supérieur (PCS) du produit de surfaçage et du produit d'isolation thermique le contenant et
- Elle diminue l'adhésion des mortiers colle et/ou de finition au produit d'isolation thermique le contenant.

La Demanderesse a mis au point un revêtement hydrophobe qui non seulement protège encore plus efficacement le produit de surfaçage contre l'alcalinité des mortiers du ETICS, mais qui n'augmente pas le pouvoir calorifique supérieur (PCS) ni ne dégrade la résistance au feu ou l'adhésion des mortiers colle et/ou de finition.

Ce revêtement hydrophobe additionnel est appliqué sur une seule face du produit de surfaçage de la présente invention et se distingue par le fait qu'il comporte une proportion importante de particules minérales, plus précisément de 75 à 90 % en masse de particules minérales, et seulement de 10 à 25 % en masse d'un polymère organique réticulé.

On entend par revêtement hydrophobe un revêtement présentant une absorption d'eau au bout de deux heures, mesurée par le test Cobb (ISO 535), inférieure à 0,1 g.

Le caractère hydrophobe du revêtement additionnel est dû en grande partie au caractère hydrophobe des particules minérales qui sont avantageusement des particules minérales ayant subi un traitement hydrophobisant, par exemple un greffage de chaînes grasses de type alkyle ou de chaînes de type polydiméthylsiloxane.

La Demanderesse a utilisé avec succès des particules de carbonate de calcium rendues hydrophobes par un greffage de chaînes alkyle, disponibles sous la dénomination commerciale Mikhart C, AC, MU08T, MU12T et MU17T auprès de la société Provençale (Brignole, France).

Le polymère organique réticulé utilisé pour lier les particules minérales entre elles et au voile de verre intissé de la présente invention est avantageusement identique ou très similaire à l'élastomère organique utilisé pour lier le voile de verre. Cette identité ou similarité garantit une bonne compatibilité et favorise une bonne adhésion du revêtement hydrophobe au voile de verre intissé selon la présente invention.

Le polymère organique utilisé pour former le revêtement hydrophobe additionnel est donc avantageusement un caoutchouc styrène-butadiène (SBR) autoréticulant, contenant éventuellement un ou plusieurs autres comonomères, par exemple un comonomère méthacrylate, et éventuellement carboxylé.

On peut toutefois envisager l'utilisation d'autres polymères organiques capables de réticuler et de former un réseau tridimensionnel tels que les résines urée-formol, les résines phénol-formol ou les résines acryliques.

La masse surfacique du revêtement hydrophobe est généralement comprise entre 280 et 500 g/m², de préférence entre 300 et 450 g/m², en particulier entre 310 et 400 g/m².

La présente invention a également pour objet un produit d'isolation thermique, sous forme de plaque, comprenant (a) une plaque de mousse, et (b) un produit de surfaçage comportant un voile de verre lié par un liant élastomère tel que décrit ci-dessus, le produit de surfaçage (a) étant fixé sur au moins une des faces principales de la plaque de mousse (b), de préférence sur les deux faces principales de la plaque de mousse.

Le voile de verre est de préférence directement en contact avec la mousse formant la plaque de mousse, sans qu'aucune couche intermédiaire, telle qu'une couche adhésive, ne soit présente.

La mousse est avantageusement une mousse non élastique, de préférence une mousse phénol-formol, communément utilisée dans le domaine de l'isolation thermique des bâtiments et disponible par exemple sous la dénomination Kooltherm de la société Kingspan.

Le produit d'isolation thermique a de préférence une épaisseur comprise entre 30 et 200 mm et une masse volumique comprise entre 20 et 45 kg/m³.

Lorsque le produit de surfaçage utilisé pour couvrir les plaques de mousse comporte un revêtement hydrophobe, celui-ci recouvre avantageusement la totalité de la surface du produit de surfaçage et donc de la plaque de mousse.

L'invention a en outre pour objet un procédé de fabrication d'un produit d'isolation thermique tel que décrit ci-dessus, ledit procédé comprenant la coulée d'une composition expansible thermodurcissable sur un produit de surfaçage selon l'invention, et le chauffage de la composition expansible thermodurcissable.

Lorsque le produit de surfaçage comporte un revêtement hydrophobe comportant de 10 à 25 % en masse d'un polymère organique réticulé et de 75 à 90 % en masse de particules minérales, la composition expansible et thermodurcissable est coulée sur la face du produit de surfaçage opposée à celle portant le revêtement hydrophobe.

Enfin, la présente invention a pour objet un système composite d'isolation thermique par l'extérieur, posé contre la face extérieure d'une façade de bâtiment et comprenant, dans l'ordre, depuis à la façade vers l'extérieur :
- une couche de mortier colle,
- un produit d'isolation thermique tel que décrit ci-dessus,
- une couche de mortier de finition.

### Exemples

Pour mettre au point un produit de surfaçage présentant à la fois une résistance aux alcalins et une résistance au feu suffisante, les inventeurs ont testé d'abord plusieurs liants polymères, puis plusieurs agents retardateurs de flamme.

Le tableau 1 montre l'ensemble des liants organiques testés

| Fournisseur | Dénomination commerciale | Nature chimique | Teneur en solides | Tg (°C) |
|---|---|---|---|---|
| Synthomer | Litex^{®} S 9074 | Dispersions aqueuse anionique d'un copolymère butadiène-styrène-méthacrylate carboxylé auto-réticulant | 50 % | -11 °C |
| | Litex^{®} S 9076 | Dispersions aqueuse anionique d'un copolymère butadiène-styrène carboxylé auto-réticulant | 47 % | -44 °C |
| Celanese | Vinacryl^{®} 4025 | Copolymère d'acrylate d'éthyle et de méthacrylate de méthyle | 50 % | 19 °C |
| Préfère Resins | Dynea^{®} Prefere | Résine urée-formaldéhyde | 60 % | |
| Wacker | Vinnapas^{®} 192 | Dispersion d'un copolymère d'acétate de vinyle et d'éthylène (EVA) autoréticulant | 51-53 % | 10 °C |
| | Vinnapas^{®} EN1020 | Dispersion d'un copolymère d'acétate de vinyle et d'éthylène (EVA) autoréticulant | 49-51 % | - |
| BASF | Acronal^{®} 280 KD | Dispersion cationique d'un copolymère d'esters acryliques | 40 % | 20 °C |
| | Acronal^{®} S559 | Dispersion aqueuse d'un polymère acrylique | 50 % | |
| | Acrodur^{®} DS3530 | Solution d'un poly(acide carboxylique) et d'un polyol (agent réticulant) | 50 % | >100 °C |

On fabrique avec chacune de ces résines un produit de surfaçage en imprégnant un voile de verre (en fibres de verre E) fabriqué par voie humide et présentant, à l'état non lié, un grammage de 55 g/m². La quantité de liant polymérique est, pour tous les échantillons, égale à environ 20 - 25 % (LOI, de l'anglais *loss on ignition*)*.*

On détermine d'abord pour tous les voiles liés la résistance à la rupture en traction de la manière suivante :

### Mesure de la résistance à la rupture en traction

La résistance à la rupture en traction est déterminée au moyen d'un appareil MTS Insight^{®} 30 kN sur des échantillons de 5 cm x 30 cm. Les échantillons sont fixés dans l'appareil de manière à ce que la distance initiale entre les deux mors soit de 20 cm. La vitesse d'étirement est de 40 mm/minute. La résistance à la rupture en traction est la force maximale enregistrée avant la rupture de l'échantillon.

Les essais sont réalisés à une température de 23 °C et à une humidité relative de 50 %.

Chaque valeur est la moyenne de dix échantillons testés.

Ensuite on évalue la résistance aux alcalins et à l'humidité des échantillons. Pour cela, on mesure la résistance à la rupture en traction avant et après un test de vieillissement accéléré comprenant l'immersion des échantillons dans une solution alcaline ou dans de l'eau. La résistance aux alcalins a été testée en suivant les deux protocoles différents.

### Test de vieillissement aux alcalins - Protocole ETAG 004

Les échantillons prédécoupés (5 cm x 30 cm) sont immergés pendant 28 jours dans une solution alcaline (préparée par dissolution de 2 g de CaOH₂, de 4 g de NaOH et de 16 g de KOH dans 4 litre d'eau) à une température de 23 °C dans un récipient approprié. Au bout de 28 jours, la solution alcaline est remplacée par un volume équivalent d'une solution acide (contenant 0,05 % de HCl). Après 5 minutes de neutralisation, les échantillons sont lavés trois fois 5 minutes avec un volume identique d'eau, puis sont séchés pendant 48 heures à une température de 23 °C et à une humidité relative de 50 %.

### Test de vieillissement aux alcalins - Protocole DIBT

Les échantillons prédécoupés (5 cm x 30 cm) sont immergés pendant 6 heures dans une solution alcaline (préparée par dissolution complète de 2,06 g de CaOH₂, de 3,77 g de NaOH et de 14,80 g de KOH dans 4,29 litre d'eau) à une température de 60 °C dans un récipient approprié. Au bout de 6 heures, les échantillons sont lavés pendant 5 minutes avec de l'eau, puis séchés pendant 1 heure à une température de 60 °C. Après séchage, les échantillons sont conservés à 23 °C et à une humidité relative de 50 %.

### Vieillissement à l'humidité

Les échantillons prédécoupés (5 cm x 30 cm) sont immergés pendant 10 minutes dans de l'eau déionisée à une température de 80 °C dans un récipient approprié, puis retirés de l'eau. La mesure de la résistance à la rupture en traction est effectuée dès que possible sur les échantillons encore humides, c'est-à-dire sans séchage préalable.

Le tableau 2 montre les résistances à la rupture en traction avant et après vieillissement aux alcalins et à l'eau et les pourcentages de conservation (entre parenthèses).

**Tableau 2**

| Conservation de la résistance à la rupture en traction après vieillissement à l'humidité et aux alcalins des produits de surfaçage | | | | |
|---|---|---|---|---|
| Liant | Résistance à la rupture en traction initiale - en N/5cm | Vieillissement à l'humidité - en N/5cm (%) | Vieillissement aux alcalins - Protocole DIBT - en N/5cm (%) | Vieillissement aux alcalins - protocole ETAG 004 - en N/5cm (%) |
| Litex^{®} S 9074 | 135 | 111 **(82%)** | 89 **(66 %)** | 99 **(73 %)** |
| Litex^{®} S 9076 | 114 | 79 **(69 %)** | 77 **(68 %)** | 82 **(72 %)** |
| Vinacryl^{®} 4025 | 98 | 15 (15 %) | - | - |
| Acronal^{®} 280 KD | 150 | 13 (9 %) | 15 (10 %) | 25 (17 %) |
| Acronal^{®} S559 | 53 | 25 (49 %) | 52 (98 % | 53 (100 %) |
| Acrodur^{®} DS3530 | 148 | 50 (33 %) | - | - |
| Vinnapas^{®} 192 | 130 | 75 (60 %) | 51 (41 %) | 130 (100%) |
| Vinnapas^{®} EN1020 | 90 | 67 (74 %) | 44 (49 %) | 51 (57 %) |
| Préfère Resins | 120 | 46 (55%) | - | 13 (15%) |

Les résultats ci-dessus montrent que seuls les liants à base de caoutchouc styrène-butadiène carboxylé permettent de conserver une résistance à la rupture en traction supérieure à 50 % de la valeur initiale pour les trois tests de vieillissement pris en considération.

La mise au point d'un produit de surfaçage présentant une résistance au feu suffisante a donc été poursuivie avec ces élastomères.

Différents agents retardateurs ont été introduits dans le latex SBR autoréticulant Litex^{®} S 9074 en une quantité de 10 % en poids sec. Les produits de surfaçage liés par 25 % (LOI) de liant élastomère (SBR + retardateur de flamme) ont été soumis à un essai de réaction au feu selon la norme ISO 11925-2 (Allumabilité des produits soumis à l'incidence d'une source à flamme unique)

**Tableau 3**

| Retardateur de flamme | Teneur en retardateur de flamme | Essai de résistance au feu | Conservation de la résistance à la rupture en traction (protocole ETAG004) |
|---|---|---|---|
| Sulfamate d'ammonium* | 10 % | réussi | 60 % (ok) |
| Mélamine** | 10 % | échec | 25 % (insuffisant) |
| Ammonium polyphosphate*** | 10 % | échec | 75 (ok) |

| | | | |
|---|---|---|---|
| *Bemiflame PF (Schmits) **Aflammit PCI 202 (Thor) ***Aflamit PMN 500 (Thor) | | | |

Le tableau 3 montre que seul le sulfamate d'ammonium confère aux produits de surfaçage une réaction au feu satisfaisante. Ce retardateur de flamme a été incorporé dans le liant à différentes concentrations allant de 5 à 20 % en masse.

Les résultats de ces essais, présentés au Tableau 4 ci-dessous, montrent qu'une concentration croissante de sulfamate d'ammonium réduit la résistance aux alcalins du produit de surfaçage. A 20 % en poids de sulfamate d'ammonium, cette résistance aux alcalins est encore à peu près satisfaisante (c'est-à-dire supérieure à 50 %), mais de manière inattendue la résistance au feu d'un produit de surfaçage contenant une forte concentration de ce retardateur est insuffisante.

**Tableau 4**

| Retardateur de flamme | Teneur en retardateur de flamme | Essai de résistance au feu | Conservation de la résistance à la rupture en traction (protocole ETAG004) |
|---|---|---|---|
| Sulfamate d'ammonium | 5% | échec | 77 % (ok) |
| Sulfamate d'ammonium | 10 % | réussi | 60 % (ok) |
| Sulfamate d'ammonium | 15 % | réussi | 65 % (ok) |
| Sulfamate d'ammonium | 20 % | échec | 54 % (ok) |

## Revendications

1. Produit de surfaçage pour plaques de mousse, comportant un voile de verre lié par un liant élastomère, **caractérisé par le fait que** le liant élastomère contient
(a) un élastomère organique qui est un caoutchouc styrène-butadiène-méthacrylate autoréticulant portant des fonctions carboxylate anioniques, et
(b) de 8 à 18 % en masse de sulfamate d'ammonium rapporté à la somme d'élastomère organique et de sulfamate d'ammonium.

2. Produit de surfaçage selon la revendication 1, **caractérisé par le fait que** le liant élastomère contient de 9 à 17 % en masse de sulfamate d'ammonium rapporté à la somme d'élastomère organique et de sulfamate d'ammonium.

3. Produit de surfaçage selon la revendication 2, **caractérisé par le fait que** le liant élastomère contient de 10 à 15 % en masse de sulfamate d'ammonium, rapporté à la somme d'élastomère organique et de sulfamate d'ammonium

4. Produit de surfaçage selon l'une quelconque des revendications précédentes, **caractérisé par le fait que** la quantité de liant élastomère, rapportée au poids du voile de verre non lié, est comprise entre 15 et 40 % en masse, de préférence entre 20 et 30 % en masse.

5. Produit de surfaçage selon l'une quelconque des revendications précédentes, **caractérisé par le fait que** le poids surfacique du voile de verre non lié est compris entre 30 et 350 g/m², de préférence entre 40 et 250 g/m², plus préférentiellement entre 50 et 100 g/m² et idéalement entre 55 et 80 g/m².

6. Produit de surfaçage selon l'une quelconque des revendications précédentes, **caractérisé par le fait qu'**il comporte en outre, sur une seule de ces faces un revêtement hydrophobe comportant de 10 à 25 % en masse d'un polymère organique réticulé et de 75 à 90 % en masse de particules minérales.

7. Produit de surfaçage selon la revendication 6, **caractérisé par le fait que** le polymère organique réticulé est du caoutchouc styrène-butadiène (SBR) et que les particules minérales sont des particules de carbonate de calcium, de préférence des particules de carbonate de calcium rendues hydrophobes par greffage de chaînes grasses.

8. Produit de surfaçage selon la revendication 6 ou 7, **caractérisé par le fait que** la masse surfacique du revêtement hydrophobe est comprise entre 280 et 500 g/m², de préférence entre 300 et 450 g/m², en particulier entre 310 et 400 g/m².

9. Produit d'isolation thermique comprenant
- une plaque de mousse, et
- un produit de surfaçage comportant un voile de verre lié par un liant élastomère selon l'une quelconque des revendications précédentes,
le produit de surfaçage étant fixé sur au moins une des faces principales de la plaque de mousse, de préférence sur les deux faces principales de la plaque de mousse.

10. Produit d'isolation thermique selon la revendication 9, **caractérisé par le fait que** le voile de verre est directement en contact avec la mousse formant la plaque de mousse.

11. Produit d'isolation thermique selon la revendication 9 ou 10, **caractérisé par le fait que** la mousse est une mousse non élastique, de préférence une mousse phénol-formol.

12. Procédé de fabrication d'un produit d'isolation thermique selon la revendication 9 à 11, comprenant la coulée d'une composition expansible thermodurcissable sur un produit de surfaçage selon l'une quelconque des revendication 1 à 8, et le chauffage de la composition expansible thermodurcissable.

13. Procédé de fabrication selon la revendication 12, **caractérisé par le fait que**, lorsque le produit de surfaçage comporte un revêtement hydrophobe comportant de 10 à 25 % en masse d'un polymère organique réticulé et de 75 à 90 % en masse de particules minérales, la composition expansible et thermodurcissable est coulée sur la face du produit de surfaçage opposée à celle portant le revêtement hydrophobe.

14. Système composite d'isolation thermique par l'extérieur, posé contre la face extérieure d'une façade de bâtiment et comprenant, dans l'ordre, depuis à la façade vers l'extérieur :
- une couche de mortier colle,
- un produit d'isolation thermique selon les revendications 9 - 11,
- une couche de mortier de finition.

## Patentansprüche

1. Verkleidungsprodukt für Schaumstoffplatten, das eine Glasvlies aufweist, das durch ein elastomeres Bindemittel gebunden ist,
**dadurch gekennzeichnet, dass** das elastomere Bindemittel enthält
(a) ein organisches Elastomer, das ein selbstvernetzender Styrol-Butadien-Methacrylatkautschuk ist, der anionische Carboxylatfunktionen trägt, und
(b) zu 8 bis 18 Masse-% Ammoniumsulfamat, bezogen auf die Summe aus organischem Elastomer und Ammoniumsulfamat.

2. Verkleidungsprodukt nach Anspruch 1, **dadurch gekennzeichnet, dass** das elastomere Bindemittel zu 9 bis 17 Masse-% Ammoniumsulfamat enthält, bezogen auf die Summe aus organischem Elastomer und Ammoniumsulfamat.

3. Verkleidungsprodukt nach Anspruch 2, **dadurch gekennzeichnet, dass** das elastomere Bindemittel zu 10 bis 15 Masse-% Ammoniumsulfamat enthält, bezogen auf die Summe aus organischem Elastomer und Ammoniumsulfamat

4. Verkleidungsprodukt nach einem der vorstehenden Ansprüche,
**dadurch gekennzeichnet, dass** die Menge an elastomerem Bindemittel, bezogen auf das Gewicht des nicht gebundenen Glasvlieses, im Bereich zwischen 15 und 40 Masse-%, vorzugsweise zwischen 20 und 30 Masse-% liegt.

5. Verkleidungsprodukt nach einem der vorstehenden Ansprüche,
**dadurch gekennzeichnet, dass** das flächenbezogene Gewicht des nicht gebundenen Glasvlieses im Bereich zwischen 30 und 350 g/m², vorzugsweise zwischen 40 und 250 g/m², mehr bevorzugt zwischen 50 und 100 g/m² und idealerweise zwischen 55 und 80 g/m² liegt.

6. Verkleidungsprodukt nach einem der vorstehenden Ansprüche,
**dadurch gekennzeichnet, dass** es ferner eine auf einer einzigen dieser Flächen eine hydrophobe Beschichtung aufweist, die zu 10 bis 25 Masse-% ein vernetztes organisches Polymer und zu 75 bis 90 Masse-% mineralische Partikel aufweist.

7. Verkleidungsprodukt nach Anspruch 6, **dadurch gekennzeichnet, dass** das vernetzte organische Polymer Styrol-Butadien-Kautschuk (SBR) ist und die mineralischen Partikel Calciumcarbonatpartikel sind, vorzugsweise Calciumcarbonatpartikel, die durch Pfropfen von Fettketten hydrophob gemacht werden.

8. Verkleidungsprodukt nach Anspruch 6 oder 7,
**dadurch gekennzeichnet, dass** die flächenbezogene Masse der hydrophoben Beschichtung im Bereich zwischen 280 und 500 g/m², vorzugsweise zwischen 300 und 450 g/m², insbesondere zwischen 310 und 400 g/m² liegt.

9. Wärmedämmungsprodukt, umfassend
- eine Schaumstoffplatte, und
- ein Verkleidungsprodukt, das ein Glasvlies aufweist, das durch ein elastomeres Bindemittel gebunden ist, nach einem der vorstehenden Ansprüche, wobei das Verkleidungsprodukt an mindestens einer der Hauptflächen der Schaumstoffplatte befestigt ist, vorzugsweise an beiden Hauptflächen der Schaumstoffplatte.

10. Wärmedämmungsprodukt nach Anspruch 9,
**dadurch gekennzeichnet, dass** das Glasvlies mit dem Schaumstoff direkt in Kontakt steht, der die Schaumstoffplatte ausbildet.

11. Wärmedämmungsprodukt nach Anspruch 9 oder 10,
**dadurch gekennzeichnet, dass** der Schaumstoff ein nicht elastischer Schaumstoff ist, vorzugsweise ein Phenol-Formaldehyd-Schaumstoff.

12. Verfahren zum Herstellen eines Wärmedämmungsprodukts nach Anspruch 9 bis 11, umfassend das Gießen einer wärmehärtbaren schäumbaren Zusammensetzung auf ein Verkleidungsprodukt nach einem der Ansprüche 1 bis 8 und das Erhitzen der schäumbaren Zusammensetzung.

13. Herstellungsverfahren nach Anspruch 12,
**dadurch gekennzeichnet, dass,** wenn das Verkleidungsprodukt eine hydrophobe Beschichtung aufweist, die zu 10 bis 25 Masse-% ein vernetztes organisches Polymer und zu 75 bis 90 Masse-% mineralische Partikel aufweist, die schäumbare und wärmehärtbare Zusammensetzung auf die Fläche des Verkleidungsprodukts gegossen wird, die der gegenüberliegt, die die hydrophobe Beschichtung trägt.

14. Verbundsystem für Wärmedämmung von außen, das gegen die Außenfläche einer Gebäudefassade installiert ist und umfassend, in der Reihenfolge von der Fassade nach außen:
- eine Klebstoffmörtelschicht,
- ein Wärmedämmungsprodukt nach den Ansprüchen 9 bis 11,
- eine Deckmörtelschicht.

## Claims

1. A facing product for foam boards, comprising a glass veil bonded by an elastomer binder, **characterized in that** the elastomer binder contains:
(a) an organic elastomer that is a self-crosslinking styrene-butadiene-methacrylate rubber bearing anionic carboxylate functions, and
(b) from 8 to 18% by weight of ammonium sulfamate relative to the sum of organic elastomer and ammonium sulfamate.

2. The facing product as claimed in claim 1, **characterized in that** the elastomer binder contains from 9 to 17% by weight of ammonium sulfamate relative to the sum of organic elastomer and ammonium sulfamate.

3. The facing product as claimed in claim 2, **characterized in that** the elastomer binder contains from 10 to 15% by weight of ammonium sulfamate relative to the sum of organic elastomer and ammonium sulfamate.

4. The facing product as claimed in any one of the preceding claims, **characterized in that** the amount of elastomer binder, relative to the weight of the unbonded glass veil, is between 15 and 40% by weight, preferably between 20 and 30% by weight.

5. The facing product as claimed in any one of the preceding claims, **characterized in that** the surface density of the unbonded glass veil is between 30 and 350 g/m², preferably between 40 and 250 g/m², more preferentially between 50 and 100 g/m² and ideally between 55 and 80 g/m².

6. The facing product as claimed in any one of the preceding claims, **characterized in that** it further comprises, on only one of its faces, a hydrophobic coating comprising from 10 to 25% by weight of a crosslinked organic polymer and from 75 to 90% by weight of mineral particles.

7. The facing product as claimed in claim 7, **characterized in that** the crosslinked organic polymer is styrene-butadiene rubber (SBR) and that the mineral particles are calcium carbonate particles, preferably calcium carbonate particles rendered hydrophobic by grafting of fatty chains.

8. The facing product as claimed in claim 6 or 7, **characterized in that** the surface density of the hydrophobic coating is between 280 and 500 g/m², preferably between 300 and 450 g/m², in particular between 310 and 400 g/m².

9. A thermal insulation product comprising:
- a foam board, and
- a facing product comprising a glass veil bonded by an elastomer binder as claimed in any one of the preceding claims,
the facing product being fastened to at least one of the main faces of the foam board, preferably to the two main faces of the foam board.

10. The thermal insulation product as claimed in claim 9, **characterized in that** the glass veil is directly in contact with the foam forming the foam board.

11. The thermal insulation product as claimed in claim 9 or 10, **characterized in that** the foam is a nonelastic foam, preferably a phenol-formaldehyde foam.

12. A process for manufacturing a thermal insulation product as claimed in claims 9 to 11, the casting of a thermosetting expandable composition on a facing product as claimed in any one of claims 1 to 9, and the heating of the thermosetting expandable composition.

13. The manufacturing process as claimed in claim 12, **characterized in that**, when the facing product comprises a hydrophobic coating comprising from 10 to 25% by weight of a crosslinked organic polymer and from 75 to 90% by weight of mineral particles, the thermosetting expandable composition is cast on the face of the facing product opposite the one bearing the hydrophobic coating.

14. An external thermal insulation composite system, installed against the outside face of a building facade and comprising, in order, from the facade outward:
- a layer of adhesive mortar,
- a thermal insulation product as claimed in claims 9 - 11,
- a layer of finishing mortar.
